# EUROPÄISCHE PATENTSCHRIFT

(11) **EP 3 444 210 B1**
(45) Veröffentlichungstag und Bekanntmachung des Hinweises auf die Patenterteilung: **28.09.2022**
(21) Anmeldenummer: 18185943.0
(22) Anmeldetag: 27.07.2018
(51) Int. Cl.: B65G 69/18, B65B 69/00

(54) **VERBINDUNGSVORRICHTUNG ZUM VERBINDEN EINES FLEXIBLEN ERSTEN BEHÄLTERS MIT EINEM FORMSTABILEN ZWEITEN BEHÄLTER**
CONNECTING DEVICE FOR CONNECTING A FLEXIBLE FIRST CONTAINER TO A DIMENSIONALLY STABLE SECOND CONTAINER
DISPOSITIF DE CONNEXION POUR RACCORDER UN PREMIER CONTENEUR FLEXIBLE À UN SECOND CONTENEUR DE DIMENSIONS STABLES

(30) Priorität: 02.08.2017 AT 506442017
(43) Veröffentlichungstag der Anmeldung: 20.02.2019
(73) Patentinhaber: Vogelbusch Biopharma GmbH, 1050 Wien (AT)
(72) Erfinder: Kallinger, Harald, 1150 Wien (AT); Pühringer, Karl, 2325 Himberg (AT)
(74) Vertreter: Puchberger & Partner Patentanwälte

(56) Entgegenhaltungen:
- EP-A1- 3 000 739
- US-A- 5 065 891
- US-A1- 2001 027 822
- US-A1- 2005 056 650
- US-A1- 2008 145 198
- US-B1- 6 340 100

## Beschreibung

Die Erfindung betrifft eine Verbindungsvorrichtung zum Verbinden eines flexiblen ersten Behälters mit einem formstabilen, eine Einfüllöffnung aufweisenden, zweiten Behälter.

Beim Überführen von pulverförmigen oder granularen Stoffen von einem Behälter in einen anderen Behälter, wie dies beispielsweise beim Ansetzen von Nährlösungen notwendig ist, stellt die mögliche Staubentwicklung ein beträchtliches Problem dar. Speziell in Reinräumen oder beim Hantieren mit gefährlichen Stoffen sollte möglichst keine Freisetzung von Partikeln in die Umgebungsluft erfolgen.

Typischerweise werden die zur Beladung des Ansatzbehälters benötigten Stoffe in vorportionierter Form beispielsweise in Kunststoffsäcken bereitgestellt. Da sich die benötigte Menge an Material bereits im Sack befindet, ist kein Abwiegen oder Dosieren mehr notwendig, sondern der komplette Inhalt soll in den Ansatzbehälter überführt werden. Die Zugabe in den Ansatzbehälter erfolgt meist über ein sogenanntes Handloch, welches im Betriebszustand des Ansatzbehälters durch einen Deckel druckfest verschlossen ist.

Händisch erfolgt die Zugabe des Materials etwa mit Hilfe von kleinen Schaufeln und Trichtern. Dabei muss sehr vorsichtig vorgegangen werden, um Verluste sowie übermäßige Staubentwicklung zu vermeiden. Naturgemäß ist eine solche händische Überführung zeitraubend und die Gefahr besteht, dass Material verloren geht.

Im Stand der Technik sind verschiedene Vorrichtungen zum Überführen von pulverförmigen oder granularen Stoffen, insbesondere solcher, die zur Staubbildung neigen, bekannt. Beispielsweise offenbart die europäische Patentschrift EP 2 060 332 B1 eine trichterförmige Einfüllvorrichtung mit Absaugvorrichtung für entstehende luftgetragene Partikel. Hierdurch kommt es zu einer Absaugung des beim Einfüllen entstehenden Staubes.

Nachteilig an solchen bekannten gattungsgemäßen Einfüllvorrichtungen ist, dass weiterhin eine manuelle Überführung des Materials notwendig ist. Es wird zwar der beim Einfüllen entstehende Staub abgesaugt, der jedoch dann verloren geht. Außerdem kann es trotzdem zu einem Verlust von Material während des Überführens kommen, da etwa Teile des Pulvers einfach von der Schaufel fallen können. Durch die weiterhin notwendige manuelle Überführung des Materials wird nur eine begrenzte Zeitersparnis erzielt. Ferner ist das Material beim Überführen der Umgebungsluft ausgesetzt, was beispielsweise bei hygroskopischen oder sauerstoffempfindlichen Stoffen problematisch sein kann. Zusätzlich kann das Hantieren mit beispielsweise toxischem Material einen sicherheitsrelevanten Aspekt darstellen.

Eine Vorrichtung, die ein im Wesentlichen staubfreies Überführen der Stoffe ermöglicht, ist aus der US 2001/0027822 A1 bekannt. Hier wird über ein Verbindungsstück eine feste Verbindung zwischen den beiden Behältern hergestellt. Das Verbindungsstück ist mit einem der Behälter verschraubt, sodass zum Lösen der Verbindung der Einsatz von Werkzeug notwendig ist. US 2001/027822 A1, US 6340100 B1, US 2005/056650 A1 sowie US 5065891 A offenbaren jeweils eine Verbindungsvorrichtung nach dem Oberbegriff des Anspruchs 1.

Es ist eine Aufgabe der vorliegenden Erfindung, die Nachteile des Standes der Technik zu überwinden und eine Vorrichtung zu schaffen, die ein schnelles, einfaches und staubfreies Überführen von beispielsweise pulvrigem Material aus Behältern wie etwa Kunststoffsäcken insbesondere in Ansatzbehälter ermöglicht.

Diese und andere Aufgaben werden unter anderem dadurch gelöst, dass ein Verbindungsstück vorgesehen ist, das dazu ausgebildet ist, an eine Öffnung des ersten Behälters angebracht zu werden, wobei es diese Öffnung umschließt.

Dabei ist das Verbindungsstück durch ein Befestigungselement an der Einfüllöffnung des zweiten Behälters, insbesondere des Ansatzbehälters, variabel befestigbar.

Die erfindungsgemäße Verbindungsvorrichtung erlaubt ein einfaches Verbinden der beiden Behälter. Durch die Herstellung einer direkten Verbindung zwischen dem das Material enthaltenden und dem zu befüllenden Behälter wird eine rasche Entleerung ermöglicht, ohne Gefahr zu laufen, Material zu verlieren.

Das erfindungsgemäße Verbindungsstück kann dabei an jeden beliebigen flexiblen Behälter angebracht werden und es ist keine spezifische Anpassung des flexiblen ersten Behälters erforderlich. Dadurch wird erreicht, dass keine Umstellung von eventuellen weiteren Prozessparametern erforderlich ist, wenn die erfindungsgemäße Vorrichtung in einem Betrieb verwendet werden soll. Insbesondere ist es nicht notwendig, Änderungen an den Kunststoffsäcken, in denen das vorportionierte Material angeliefert wird, vorzunehmen.

Die Größe des Verbindungsstücks ist dabei auf den Durchmesser der Einfüllöffnung des zweiten Behälters, insbesondere des Handlochs eines Ansatzbehälters, angepasst. Durch die Befestigungselemente erfolgt eine variable Befestigung des Verbindungsstücks am zweiten Behälter, wodurch eine flexible und einfache Anbringung erreicht wird.

Gemäß einem weiteren erfindungsgemäßen Merkmal kann vorgesehen sein, dass eine Mantelfläche des ersten Behälters durch das Verbindungsstück wenigstens teilweise zwischen dem Verbindungsstück und der Einfüllöffnung einklemmbar ist.

Ein flexibler erster Behälter, der das zu überführende Material enthält, kann dadurch vorteilhafterweise zwischen dem Verbindungsstück und der Oberkante der Einfüllöffnung eingeklemmt werden. So kann eine im Wesentlichen staubdichte Verbindung zwischen dem ersten Behälter und dem zweiten Behälter erreicht werden. Dadurch kommt es zu einer weitgehenden Vermeidung der Freisetzung von Staub in die Umgebungsluft. Durch das eingeklemmte Material des ersten Behälters wird im Wesentlichen eine Abdichtung erreicht.

Gemäß einem weiteren erfindungsgemäßen Merkmal kann vorgesehen sein, dass das Befestigungselement mit dem zweiten Behälter im Bereich der Einfüllöffnung vorzugsweise kraftschlüssig verbunden ist.

Sind die Befestigungselemente am zweiten Behälter fixiert, ist nur das Verbindungsstück als loses Teil vorgesehen. Damit können die Befestigungselemente auch nicht verloren gehen. Durch eine Reduktion der Anzahl an losen Teilen wird eine möglichst einfache Handhabung der Verbindungsvorrichtung erreicht. Weiters befinden sich die Befestigungselemente immer an der richtigen Position.

Das Verbindungsstück muss nicht gesondert gereinigt werden, da es bei erfindungsgemäßem Gebrauch der Verbindungsvorrichtung zu keiner Zeit in Kontakt mit dem zu überführenden Material kommt.

Erfindungsgemäß ist vorgesehen, dass das Verbindungsstück einen im Wesentlichen kreisförmigen Klemmring und zur Verbindung mit den Befestigungselementen einen Haltestift umfasst. Der Haltestift ist entlang des Umfangs des Klemmrings radial nach außen verlaufend angeordnet.

In dieser vorteilhaften Ausführungsvariante wird ein möglichst einfacher Aufbau des Verbindungsstücks erreicht. Dabei ist jedoch gleichermaßen eine möglichst effektive Befestigungswirkung gegeben. Der Klemmring dient dabei zur Festklemmen des ersten Behälters an der Einfüllöffnung des zweiten Behälters und der Haltestift wechselwirkt mit dem Befestigungselement. Es können auch mehrere Haltestifte an einem Klemmring vorgesehen sein.

Gemäß einem weiteren erfindungsgemäßen Merkmal kann vorgesehen sein, dass der Haltestift wenigstens teilweise scharfe Kanten oder eine spitz zulaufende Form aufweist.

In der Ausführungsvariante, in der das Verbindungsstück einen Klemmring und einen Haltestift umfasst, muss der Haltestift freiliegen, um ein sicheres Wechselwirken der Haltestifte mit dem Befestigungselement zu ermöglichen. Da ein Teil des ersten Behälters typischerweise zwischen dem Befestigungselement und dem Haltestift liegt, muss der flexible erste Behälter durch den Haltestift erst durchdrungen werden. Dies wird erleichtert, wenn der Haltestift scharfe Kanten oder eine spitz zulaufende Form aufweist. Durch eine nur teilweise Ausführung der scharfen Kanten wird auch der Sicherheitsaspekt nicht beeinträchtigt.

Gemäß einem weiteren erfindungsgemäßen Merkmal kann vorgesehen sein, dass das Verbindungsstück Nuten, Vorsprünge oder Fräsungen aufweist. Diese sind vorzugsweise gegengleich zu entsprechenden Nuten, Vorsprünge oder Fräsungen an der Einfüllöffnung ausgeführt.

Durch das Anbringen von Nuten, Vorsprüngen oder Fräsungen am Verbindungsstück wird in erster Linie eine optimale Zentrierung des Verbindungsstücks an der Einfüllöffnung gewährleistet. Es wird dadurch ein fehlerhaftes Anbringen des Verbindungsstücks verhindert, wodurch ein unbeabsichtigter Austritt von Material hintangehalten werden kann. Im Fall von Ansatzbehältern weist die Einfüllöffnung typischerweise bereits Nuten, Vorsprünge oder Fräsungen auf, die mit der Abdeckung der Einfüllöffnung zusammenwirken. Durch eine gegengleiche Ausführung an der an der Einfüllöffnung anliegenden Seite des Verbindungsstücks kann die bestmögliche Positionierung erreicht werden.

Gemäß einem weiteren erfindungsgemäßen Merkmal kann vorgesehen sein, dass das Befestigungselement federnd ist und insbesondere einen u-förmigen oder einen s-förmigen Querschnitt aufweist.

Durch die u-förmige oder s-förmige Ausführung des Befestigungselements wird eine Federwirkung erreicht. Dadurch wird ein Anpressen des Verbindungsstücks an die Einfüllöffnung durch die Federkraft des Befestigungselements erzielt. So wird einerseits ein Verrutschen des Verbindungsstücks während des Einfüllvorgangs verhindert, andererseits wird permanente Dichtheit der Verbindung ermöglicht.

Ferner wird durch die federnden Eigenschaften des Befestigungselements eine leichte Anbringbarkeit des Verbindungsstücks an die Einfüllöffnung des zweiten Behälters ermöglicht.

Erfindungsgemäß ist weiters vorgesehen, dass das Befestigungsstück einen Befestigungsflügel, ein federndes Federteil und einen Rastflügel umfasst.

Durch den Befestigungsflügel wird eine stabile Verbindung des Befestigungsstücks mit dem zweiten Behälter erreicht. Das Federteil gibt dem Befestigungsstück eine gewisse Flexibilität und der Rastflügel dient dem Einrasten und Fixieren des Verbindungsstücks.

Gemäß der Erfindung weist das Befestigungselement zum Eingriff des Haltestifts einen Rastbereich auf, der am Rastflügel angeordnet ist . Vorzugsweise ist der Rastbereich gezahnt.

Ist am Befestigungselement ein gezahnter Rastbereich für den Haltestift vorgesehen, kann dieser in den Rastbereich eingeführt und dort variabel befestigt oder fixiert werden. Dadurch ergibt sich der Vorteil, dass die Anbringposition des Verbindungsstücks je nach Anforderung variiert werden kann.

Gemäß einem weiteren erfindungsgemäßen Merkmal kann vorgesehen sein, dass der Rastbereich relativ zur einer durch die Einfüllöffnung aufgespannte Ebene winkelig verläuft, vorzugsweise in einem Winkel zwischen 10° und 30°.

Dadurch sind innere Stellen des Rastbereichs näher an der Einfüllöffnung als äußere Stellen des Rastbereichs. Dieser winkelige Verlauf des Rastbereichs bewirkt die Möglichkeit der Anpassung des Anpressdrucks des Verbindungselements. An äußeren Stellen des Rastbereichs ist der Haltestift leicht in den Rastflügel einführbar und es wird noch kein Druck auf das Verbindungsstück ausgeübt. Beim Verschieben des Verbindungsstücks in Richtung innerer Stellen des Rastbereichs erfolgt eine Erhöhung des Drucks, da das Verbindungsstück gegen die Einfüllöffnung gedrückt wird.

Gemäß einem weiteren erfindungsgemäßen Merkmal kann vorgesehen sein, dass der Rastbereich mehrere Rasten aufweist, deren Abmessungen an den Haltestift angepasst sind.

Sind mehrere, genau an die Abmessungen des Haltestifts angepasste, Rasten vorgesehen, wird ein Verrutschen des Haltestifts im Rastbereich verhindert. Insbesondere wird bei der winkeligen Anordnung des Rastbereichs ein Zurückrutschen und damit ein Lockern des Verbindungsstücks verhindert.

Gemäß einem weiteren erfindungsgemäßen Merkmal kann vorgesehen sein, dass zwei Haltestifte vorgesehen sind, welche um etwa 180° am Umfang des Verbindungsstücks versetzt angeordnet sind. Weiters kann vorgesehen sein, dass zwei Befestigungselemente vorgesehen sind, welche im Wesentlichen einander gegenüberliegend im Bereich der Einfüllöffnung angeordnet sind.

Dadurch wird ein gleichmäßiges Anpressen des Klemmrings an die Einfüllöffnung erreicht. Ferner ist ein manuelles Befestigen leichter möglich, wenn zwei Haltestifte vorgesehen sind.

Gemäß einem weiteren erfindungsgemäßen Merkmal kann vorgesehen sein, dass das Verbindungsstück und das Befestigungselement Edelstahl umfassen.

Edelstahl stellt ein robustes Material für die Ausführung der Verbindungsvorrichtung dar. Weiters ist, sofern ein Ansatzbehälter als zweiter Behälter vorgesehen ist, dieser auch aus Edelstahl und somit ist eine Anpassung der Fertigungsmaterialien möglich. Gemäß einem weiteren erfindungsgemäßen Merkmal kann vorgesehen sein, dass das Befestigungselement gebogenes Edelstahlblech, vorzugsweise mit einer Dicke von etwa 1 mm bis 3 mm umfasst.

Um besonders gute federnde Eigenschaften des Befestigungselements zu erreichen, kann dieses Edelstahlblech umfassen.

Weitere erfindungsgemäße Merkmale ergeben sich aus den Patentansprüchen, den Ausführungsbeispielen und den Figuren.

Im Folgenden wird die Erfindung in Form eines Ausführungsbeispiels näher erläutert.

Dabei zeigen:
Fig. 1: Ein Ausführungsbeispiel der erfindungsgemäßen Vorrichtung, wobei ein erster Behälter an der Einfüllöffnung eines zweiten Behälters befestigt ist;
Fig. 2a: Ein Ausführungsbeispiel eines erfindungsgemäßen Verbindungsstücks in Aufsicht;
Fig. 2b: Das in Fig. 2a gezeigte Ausführungsbeispiel in seitlicher Projektionsansicht;
Fig. 3a: Ein Ausführungsbeispiel eines erfindungsgemäßen Befestigungselements mit sichtbarem Rastbereich;
Fig. 3b: Das in Fig. 3a gezeigte Ausführungsbeispiel in seitlicher Projektionsansicht;
Fig. 3c: Das in Fig. 3a gezeigte Ausführungsbeispiel in Aufsicht.

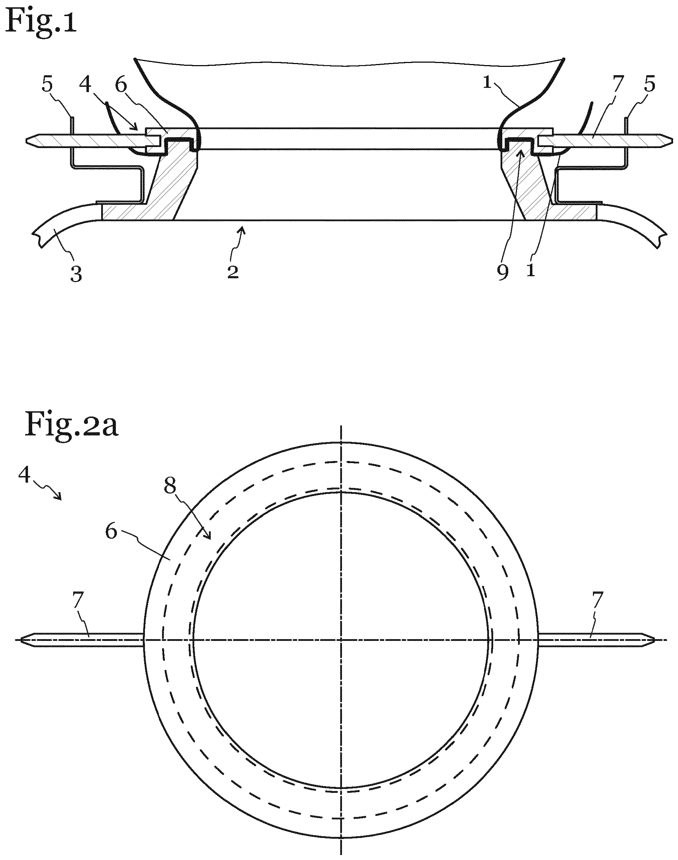

Fig. 1 zeigt ein Ausführungsbeispiel der erfindungsgemäßen Vorrichtung, wobei ein erster Behälter 1 an der Einfüllöffnung 2 eines zweiten Behälters 3 befestigt ist. Der erste Behälter 1 ist in diesem Ausführungsbeispiel ein Kunststoffsack, der schematisch angedeutet ist. Der zweite Behälter 3 ist ein Ansatzbehälter mit einer kreisförmigen Einfüllöffnung 2, auf der während des Betriebs des Ansatzbehälters ein Deckel mit Schauglas angebracht ist. An der Einfüllöffnung 2 ist ein Vorsprung 9 ausgebildet. Der erste Behälter 1 ist am inneren Umfang eines Verbindungsstücks 4 angeordnet.

In diesem Ausführungsbeispiel umfasst das Verbindungsstück 4 einen Klemmring 6 sowie zwei, um 180° am äußeren Umfang des Klemmrings 6 versetzt angeordnete Haltestiften 7. Dabei weisen die Haltestifte 7 spitz zulaufende Enden auf, um gegebenenfalls den ersten Behälter 1 durchstoßen zu können. Weiters sind zwei Befestigungselemente 5 zu sehen, welche an der Außenseite des zweiten Behälters 3 ebenfalls um 180° versetzt angeordnet sind. Die Befestigungselemente 5 sind dazu ausgebildet, um die Haltestifte 7 eingreifen zu lassen.

Im gezeigten Ausführungsbeispiel wird die erfindungsgemäße Verbindungsvorrichtung dazu verwendet, um einen zweiten Behälter 3, nämlich einen Ansatzbehälter, mit einem pulverförmigen Nährmedium zu beladen. Der Durchmesser der Einfüllöffnung 2 beträgt in diesem Ausführungsbeispiel 150 mm. In anderen Ausführungsbeispielen kann der Durchmesser der Einfüllöffnung 2 jedoch auch 100 mm, 200 mm oder einen anderen Durchmesser betragen.

Die einzusetzende Menge des Nährmediums wird bereits vorportioniert in ersten Behältern 1, nämlich verschlossenen Kunststoffsäcken, bereitgestellt. Über dem Verschluss weisen die ersten Behälter 1 einen Überstand von etwa 40 cm Kunststoff auf.

In diesem Ausführungsbeispiel umfasst das Verbindungsstück 4 umfassend einen Klemmring 6 und zwei Haltestifte 7 aus rostfreiem Edelstahl. Der Klemmring 6 ist ein gedrehter Edelstahlring mit einem Innendurchmesser von 140 mm und einem Außendurchmesser von 180 mm. Die Haltestifte 7 sind Edelstahlstifte mit Gewinden an je einer Seite, um ein Eindrehen in passend am Klemmring 6 ausgeführte Gewindeöffnungen zu erlauben. Die Haltestifte 7 besitzen in diesem Ausführungsbeispiel eine Länge von etwa 100 mm und einen Durchmesser von etwa 5 mm. In anderen Ausführungsbeispielen können die Größen variieren, je nach Dimension der Einfüllöffnung 2 und anderen Anforderungen.

In einem ersten Arbeitsschritt wird der über dem Verschluss befindliche Kunststoff des ersten Behälter 1 in den Klemmring 6 des Verbindungsstücks 4 eingeführt.

Dann wird der erste Behälter 1 mit dem darauf locker angebrachten Verbindungsstück 4 in Richtung Einfüllöffnung 2 des zweiten Behälters 3 geführt. Der überstehende Kunststoff des ersten Behälters 1 wird sodann über den Klemmring 6 gespannt und der im Bereich der Haltestifte 7 befindliche Kunststoff wird durch die an ihren Enden spitz zulaufenden Haltestifte 7 durchstoßen.

Danach wird das Verbindungsstück 4 auf die Einfüllöffnung 2 des zweiten Behälters 3 aufgelegt. Ein genaues Zentrieren des Verbindungsstücks 4 an der Einfüllöffnung 2 wird durch eine im Klemmring vorgesehene Nut 8 und einen dazu gegengleich ausgeführten Vorsprung 9 an der Einfüllöffnung 2 erreicht. Die Haltestifte 7 werden durch Verdrehen des Verbindungsstücks 4 in die Rastbereiche 13 der jeweiligen Rastflügel 12 der beiden Befestigungselemente 5 eingebracht. Die in den Rastbereichen 13 vorgesehenen Rasten 14 sind dabei genau auf die Dimensionen der eingeführten Haltestifte 7 abgestimmt, wodurch ein stufenweises Einrasten möglich ist. Ferner sind die Rastbereiche 13 um etwa 20° gegenüber der Einfüllöffnung 2 geneigt.

Durch die Neigung der Rastbereiche 13 wird vorerst ein einfaches Einbringen der Haltestifte 7 ermöglicht. Mit weiterem Drehen des Verbindungsstücks 4 wird der Anpressdruck immer weiter erhöht und es wird eine dichte Verbindung zwischen erstem Behälter 1 und zweitem Behälter 3 hergestellt. Da die Befestigungselemente 5 gebogenes rostfreies Edelstahlblech umfassen, wird durch die Federwirkung eine weitere Befestigung erreicht. Die Abdichtung wird durch einen an der Einfüllöffnung 2 vorgesehenen Vorsprung 9 und eine im Klemmring 6 vorgesehene Nut 8 erreicht, wobei das Material des ersten Behälters 1 zwischen Einfüllöffnung 2 und Klemmring 6 gepresst wird.

Ist durch das Verdrehen des Verbindungsstücks 4 eine zufriedenstellende Dichtheit erreicht, kann der erste Behälter 1 entleert werden. Dazu ist es lediglich notwendig, das gesamte Material in Richtung der Einfüllöffnung 2 zu befördern, von wo es sodann in den zweiten Behälter 3 rieselt.

Durch eine komplette Abdichtung kommt es beim Überführen zu keiner Staubbildung nach außen. Ferner muss keine Schaufel verwendet werden, wodurch ein Verlust von Material verhindert wird. Durch das einfache Anbringen wird auch die zum Befüllen benötigte Zeitdauer verringert.

Nach dem Entleeren des ersten Behälters 1 kann durch Verdrehen des Verbindungsstücks 4 die Verbindung wieder gelöst werden. Der erste Behälter 1 wird entsorgt und mit der weiteren Beladung des zweiten Behälters 3, nämlich des Ansatzbehälters, kann fortgefahren werden.

Fig. 2a zeigt ein Ausführungsbeispiel eines erfindungsgemäßen Verbindungsstücks 4 in Aufsicht. Das Verbindungsstück 4 umfasst dabei einen Klemmring 6 und zwei am äußeren Umfang des Klemmrings 6 angeordnete Haltestifte 7. Klemmring 6 und Haltestifte 7 bestehen aus rostfreiem Edelstahl.

Die Haltestifte 7 sind in den Klemmring 6 eingeschraubt. Der Klemmring 6 weist eine Nut 8 auf, welche gegengleich zu einem Vorsprung 9 an der Einfüllöffnung 2 ausgebildet ist. Die Haltestifte 7 laufen an ihren Enden spitz zu, um das Material des ersten Behälters 1 leichter durchstoßen zu können. In einem anderen Ausführungsbeispiel können auch teilweise scharfe Kanten an den Haltestiften 7 vorgesehen sein, um denselben Effekt zu erzielen.

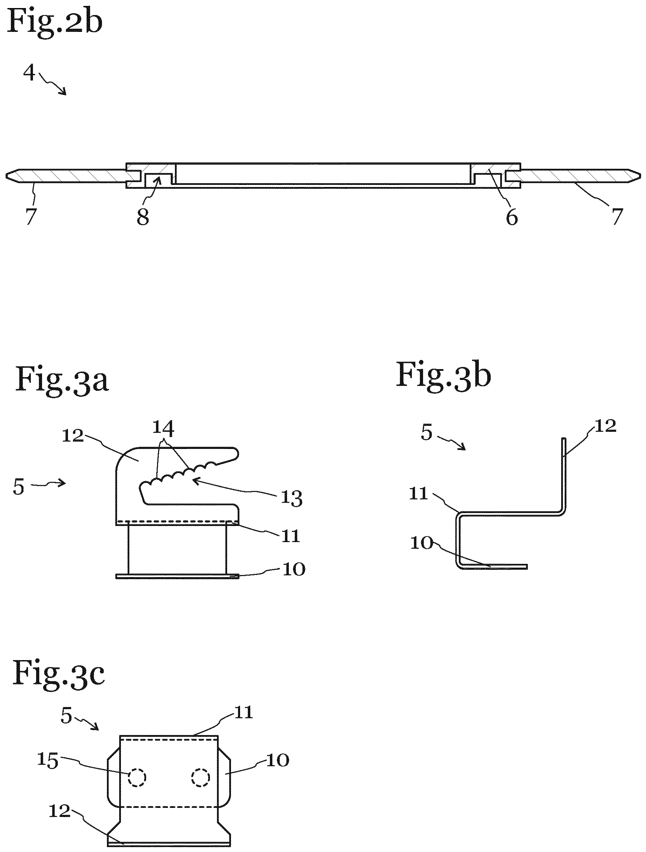

Fig. 2b zeigt das in Fig. 2a gezeigte Ausführungsbeispiel in seitlicher Projektionsansicht. Neben den Haltestiften 7 und dem Klemmring 6 ist hier die Nut 8 zum Eingreifen von gegengleichen Strukturen an der Einfüllöffnung des zweiten Behälters 3 zu sehen. Die Dicke des Klemmrings 6 beträgt in diesem Ausführungsbeispiel etwa 10 mm. In anderen Ausführungsbeispielen kann die Dicke jedoch abhängig von den spezifischen Anforderungen variieren.

Fig. 3a zeigt ein Ausführungsbeispiel eines erfindungsgemäßen Befestigungselements 5 mit sichtbarem Rastbereich 13. In diesem Ausführungsbeispiel ist das Befestigungselement 5 aus gebogenem, etwa 2 mm dickem rostfreiem Edelstahlblech gebildet. In anderen Ausführungsbeispielen kann die Dicke des Edelstahlblechs beispielsweise auch 1 mm oder 3 mm betragen, wenn andere Federeigenschaften bzw. ein größerer oder kleinerer Anpressdruck gewünscht sind.

Die in Fig. 3a sichtbaren Rasten 14 des Rastbereichs 13, welcher sich am Rastflügel 12 befindet, sind im Wesentlichen halbkreisförmig und haben einen Durchmesser von 5 mm, welcher im Wesentlichen dem Durchmesser der verwendeten Haltestifte 7 entspricht. Dadurch ist ein stufenweises Verstellen der Rastpositionen möglich. In diesem Ausführungsbeispiel sind sieben Rasten 14 vorgesehen. In anderen Ausführungsbeispielen kann sich die Zahl der Rasten 14 unterscheiden.

Ferner ist der Rastbereich 13 auch winkelig angeordnet. In diesem Ausführungsbeispiel beträgt der Winkel zur vorgesehenen Ebene der Einfüllöffnung 2 etwa 15°. Wird ein unterschiedliches Feststellverhalten gewünscht, kann in anderen Ausführungsbeispielen der Winkel beispielsweise auch etwa 10° oder 20° betragen.

Fig. 3b zeigt das in Fig. 3a gezeigte Ausführungsbeispiel in seitlicher Projektionsansicht. Dabei ist zu sehen, dass das Befestigungselement 5 aus einem Befestigungsflügel 10, einem Federteil 11 und einem Rastflügel 12 gebildet ist.

Fig. 3c zeigt das in Fig. 3a gezeigte Ausführungsbeispiel in Aufsicht. Neben dem Befestigungsflügel 10, dem Federteil 11 und dem Rastflügel 12 sind auch im Befestigungsflügel 10 ausgeführte Befestigungsvorrichtungen 15 gezeigt, welche in diesem Ausführungsbeispiel als Bohrungen ausgeführt sind. Durch diese Befestigungsvorrichtungen 15 kann das Befestigungselement 5 beispielsweise mit Hilfe von Schrauben kraftschlüssig mit dem zweiten Behälter 3 verbunden werden. Während in diesem Ausführungsbeispiel zwei Befestigungsvorrichtungen 15 vorgesehen sind, kann in einem anderem Ausführungsbeispiel auch eine beliebige andere Anzahl vorgesehen sein.

### Bezugszeichenliste

- 1: erster Behälter
- 2: Einfüllöffnung
- 3: zweiter Behälter
- 4: Verbindungsstück
- 5: Befestigungselement
- 6: Klemmring
- 7: Haltestift
- 8: Nut
- 9: Vorsprung
- 10: Befestigungsflügel
- 11: Federteil
- 12: Rastflügel
- 13: Rastbereich
- 14: Raste
- 15: Befestigungsvorrichtung

## Patentansprüche

1. Verbindungsvorrichtung zum Verbinden eines flexiblen ersten Behälters (1) mit einem formstabilen, eine Einfüllöffnung (2) aufweisenden, zweiten Behälter (3), wobei ein Verbindungsstück (4) vorgesehen ist, das dazu ausgebildet ist, an eine Öffnung des ersten Behälters (1) umschließend angebracht zu werden,
und das Verbindungsstück (4) durch ein Befestigungselement (5) an der Einfüllöffnung (2) variabel befestigbar ist, wobei das Verbindungsstück (4) einen im Wesentlichen kreisförmigen Klemmring (6) und zur Verbindung mit dem Befestigungselement (5) einen Haltestift (7) umfasst, wobei der Haltestift (7) entlang des Umfangs des Klemmrings (6) radial nach außen verlaufend angeordnet ist, **dadurch gekennzeichnet, dass** das Befestigungselement (5) (5) einen Befestigungsflügel (10), ein federndes Federteil (11) und einen Rastflügel (12) umfasst, und dass das Befestigungselement (5) zum Eingriff des Haltestifts (7) einen Rastbereich (13) aufweist, der am Rastflügel (12) angeordnet ist.

2. Verbindungsvorrichtung nach Anspruch 1, **dadurch gekennzeichnet, dass** eine Mantelfläche des ersten Behälters (1) durch das Verbindungsstück (4) wenigstens teilweise zwischen dem Verbindungsstück (4) und der Einfüllöffnung (2) des zweiten Behälters (3) einklemmbar ist.

3. Verbindungsvorrichtung nach Anspruch 1 oder 2, **dadurch gekennzeichnet, dass** das Befestigungselement (5) mit dem zweiten Behälter (3) im Bereich der Einfüllöffnung (2) vorzugsweise kraftschlüssig verbunden ist.

4. Verbindungsvorrichtung nach einem der Ansprüche 1 bis 3, **dadurch gekennzeichnet, dass** der Haltestift (7) wenigstens teilweise scharfe Kanten oder eine spitz zulaufende Form aufweist.

5. Verbindungsvorrichtung nach einem der Ansprüche 1 bis 4, **dadurch gekennzeichnet, dass** das Verbindungsstück (4) Nuten (8), Vorsprünge oder Fräsungen aufweist, welche gegengleich zu entsprechenden Nuten, Vorsprünge (9) oder Fräsungen an der Einfüllöffnung (2) ausgeführt sind.

6. Verbindungsvorrichtung nach einem der Ansprüche 1 bis 5, **dadurch gekennzeichnet, dass** das Befestigungselement (5) federnd ist und insbesondere einen u-förmigen oder einen s-förmigen Querschnitt aufweist.

7. Verbindungsvorrichtung nach einem der Ansprüche 1 bis 6, **dadurch gekennzeichnet, dass** der Rastbereich (13) gezahnt ist.

8. Verbindungsvorrichtung nach einem der Ansprüche 1 bis 7, **dadurch gekennzeichnet, dass** der Rastbereich (13) relativ zur einer durch die Einfüllöffnung (2) aufgespannte Ebene winkelig verläuft, vorzugsweise in einem Winkel zwischen 10° und 30°.

9. Verbindungsvorrichtung nach einem der Ansprüche 1 bis 8, **dadurch gekennzeichnet, dass** der Rastbereich (13) mehrere Rasten (14) aufweist, deren Abmessungen an den Haltestift (7) angepasst sind.

10. Verbindungsvorrichtung nach einem der Ansprüche 1 bis 9, **dadurch gekennzeichnet, dass** zwei Haltestifte (7) vorgesehen sind, welche um etwa 180° am Umfang des Verbindungsstücks (4) versetzt angeordnet sind und, dass zwei Befestigungselemente (5) vorgesehen sind, welche im Wesentlichen einander gegenüberliegend im Bereich der Einfüllöffnung (2) angeordnet sind.

11. Verbindungsvorrichtung nach einem der Ansprüche 1 bis 10, **dadurch gekennzeichnet, dass** das Verbindungsstück (4) und das Befestigungselement (5) Edelstahl umfassen.

12. Verbindungsvorrichtung nach Anspruch 11, **dadurch gekennzeichnet, dass** das Befestigungselement gebogenes Edelstahlblech, vorzugsweise mit einer Dicke von 1 mm bis 3 mm umfasst.

## Claims

1. A connecting device for connecting a flexible first container (1) to a dimensionally stable second container (3) having a filling opening (2), wherein a connecting piece (4) is provided being configured to be fitted to surround an opening of the first container (1), and wherein the connecting piece (4) can be variably fastened to the filling opening (2) by means of a fastening element (5), wherein the connecting piece (4) comprises a substantially circular clamp ring (6) and a holding pin (7) for connecting to the fastening element (5), wherein the holding pin (7) is arranged running in a radially outward direction along the circumference of the clamp ring (6), **characterized in that** the fastening element (5) comprises a fastening wing (10), a resilient spring member (11), and a latching wing (12), and that the fastening element (5) has a latching region (13) arranged on the latching wing (12) for engagement of the holding pin (7).

2. The connecting device according to claim 1, **characterized in that** an outer surface of the first container (1) can be clamped at least partially between the connecting piece (4) and the filling opening (2) of the second container (3) by means of the connecting piece (4).

3. The connecting device according to claim 1 or 2, **characterized in that** the fastening element (5) is connected, preferably non-positively, to the second container (3) in the region of the filling opening (2).

4. The connecting device according to one of claims 1 to 3, **characterized in that** the holding pin (7) has at least partially sharp edges or a pointed shape.

5. The connecting device according to one of claims 1 to 4, **characterized in that** the connecting piece (4) has grooves (8), projections, or millings which are formed diametrically opposite to corresponding grooves, projections (9) or millings on the filling opening (2).

6. The connecting device according to one of claims 1 to 5, **characterized in that** the fastening element (5) is resilient and, in particular, has a U-shaped or an S-shaped cross section.

7. The connecting device according to one of claims 1 to 6, **characterized in that** the latching region (13) is toothed.

8. The connecting device according to one of claims 1 to 7, **characterized in that** the latching region (13) runs at an angle relative to a plane spanned by the filling opening (2), preferably at an angle between 10° and 30°.

9. The connecting device according to one of claims 1 to 8, **characterized in that** the latching region (13) has a plurality of notches (14) whose dimensions are adapted to the holding pin (7).

10. The connecting device according to one of claims 1 to 9, **characterized in that** two holding pins (7) are provided and are arranged offset by approximately 180° on the circumference of the connecting piece (4), and **in that** two fastening elements (5) are provided and are arranged substantially opposite to each other in the region of the filling opening (2).

11. The connecting device according to one of claims 1 to 10, **characterized in that** the connecting piece (4) and the fastening element (5) comprise stainless steel.

12. The connecting device according to claim 11, **characterized in that** the fastening element comprises bent stainless steel sheet, preferably having a thickness of 1 mm to 3 mm.

## Revendications

1. Un dispositif de connexion pour connecter un premier récipient (1) flexible à un deuxième récipient (3) indéformable présentant une ouverture de remplissage (2), dans lequel une pièce de connexion (4) est prévue, laquelle est conçue pour être montée de façon à entourer une ouverture du premier récipient (1), et la pièce de connexion (4) peut être fixée de façon variable à l'ouverture de remplissage (2) par un élément de fixation (5), la pièce de connexion (4) comprenant une bague de serrage (6) sensiblement circulaire et une goupille de retenue (7) pour la connexion avec l'élément de fixation (5), la goupille de retenue (7) étant disposée le long de la circonférence de la bague de serrage (6) en s'étendant radialement vers l'extérieur, **caractérisé en ce que** l'élément de fixation (5) comprend une aile de fixation (10), une partie de ressort élastique (11) et une aile d'encliquetage (12), et **en ce que** l'élément de fixation (5) présente une zone d'encliquetage (13) pour l'engagement de la goupille de retenue (7), qui est disposée sur l'aile d'encliquetage (12).

2. Le dispositif de connexion selon la revendication 1, **caractérisé en ce que** une surface enveloppe extérieure du premier récipient (1) peut être serrée par la pièce de connexion (4) au moins partiellement entre la pièce de connexion (4) et l'ouverture de remplissage (2) du deuxième récipient (3).

3. Le dispositif de connexion selon la revendication 1 ou 2, **caractérisé en ce que** l'élément de fixation (5) est connecté au deuxième récipient (3) dans la zone de l'ouverture de remplissage (2), préférablement par adhérence.

4. Le dispositif de connexion selon l'une des revendications 1 à 3, **caractérisé en ce que** la goupille de retenue (7) présente au moins partiellement des arêtes vives ou une forme effilée.

5. Le dispositif de connexion selon l'une des revendications 1 à 4, **caractérisé en ce que** la pièce de connexion (4) présente des rainures (8), saillies ou fraisages réalisés de façon opposée à des rainures, des saillies (9) ou des fraisages correspondants sur l'ouverture de remplissage (2).

6. Le dispositif de connexion selon l'une des revendications 1 à 5, **caractérisé en ce que** l'élément de fixation (5) est élastique et présente en particulier une coupe transversale en forme de U ou en forme de S.

7. Le dispositif de connexion selon l'une des revendications 1 à 6, **caractérisé en ce que** la zone d'encliquetage (13) est denté.

8. Le dispositif de connexion selon l'une des revendications 1 à 7, **caractérisé en ce que** la zone d'encliquetage (13) s'étend de façon angulaire par rapport à un plan défini par l'ouverture de remplissage (2), préférablement selon un angle compris entre 10° et 30°.

9. Le dispositif de connexion selon l'une des revendications 1 à 8, **caractérisé en ce que** la zone d'encliquetage (13) présente plusieurs crans (14) dont les dimensions sont adaptées à la goupille de retenue (7).

10. Le dispositif de connexion selon l'une des revendications 1 à 9, **caractérisé en ce que** deux goupilles de retenue (7) sont prévues, les goupilles de retenue étant disposées avec un décalage d'environ 180° sur la circonférence de la pièce de connexion (4) et **en ce que** deux éléments de fixation (5) sont prévus, les éléments de fixation étant disposés sensiblement face à face dans la zone de l'ouverture de remplissage (2).

11. Le dispositif de connexion selon l'une des revendications 1 à 10, **caractérisé en ce que** la pièce de connexion (4) et l'élément de fixation (5) comprennent acier inoxydable.

12. Le dispositif de connexion selon la revendication 11, **caractérisé en ce que** l'élément de fixation comprend une feuille d'acier inoxydable pliée, préférablement ayant une épaisseur de 1 mm à 3 mm.
